# EUROPEAN PATENT SPECIFICATION

(11) **EP 3 654 168 B1**
(45) Date of publication and mention of the grant of the patent: **13.09.2023**
(21) Application number: 18206563.1
(22) Date of filing: 15.11.2018
(51) Int. Cl.: G06F 3/12

(54) **PRINTING SYSTEM AND A METHOD FOR DETERMINING A SURPLUS OF MEDIA IN THE DEVICE**
DRUCKSYSTEM UND VERFAHREN ZUR BESTIMMUNG EINES ÜBERSCHUSSES AN MEDIEN IN DER VORRICHTUNG
SYSTÈME D'IMPRESSION ET PROCÉDÉ PERMETTANT DE DÉTERMINER UN SURPLUS DE SUPPORTS DANS LE DISPOSITIF

(43) Date of publication of application: 20.05.2020
(73) Proprietor: Canon Production Printing Holding B.V., 5914 HH Venlo (NL)
(72) Inventor: JANSSEN, Jeroen A.P, 5914 CA Venlo (NL); WIERDA, Andreas, 5914 CA Venlo (NL); VAN VLIEMBERGEN, Eduardus J.W., 5914 CA Venlo (NL); SAMPERS, Rudolf A.H., 5914 CA Venlo (NL); BIJSTERVELD, Henricus A.G., 5914 CA Venlo (NL); BLOM, Jeroen, 5914 CA Venlo (NL); VAN DE MEULENGRAAF, Dick W.C.P., 5914 CA Venlo (NL)
(74) Representative: Canon Production Printing IP Department

(56) References cited:
- US-A1- 2009 184 456
- US-A1- 2011 292 443

## Description

### BACKGROUND OF THE INVENTION

The invention relates to a method of digitally processing images by means of a printing system comprising at least one input holder for types of media to be printed upon, a user interface provided with operating means and a display, and a print controller comprising storage and for controlling a print job queue comprising at least one print job scheduled to be printed by the printing system,
the method comprising the steps of for each type of media present in the at least one input holder determining a first amount of the type of media present in the at least one input holder, determining a second amount of the type of media that is intended to be used by print jobs in the print job queue, determining a positive surplus amount of the type of media based on the determined first amount and the determined second amount, storing the positive surplus amount in the storage of the print controller, and displaying the positive surplus amount on the display of the user interface.

The printing system may be for example a printing system or a copying system. Hereinafter an input holder may also be referred to as "input tray", or short as "tray". The printing system may also be called "printer".

For instance, in a network system, personal workstations of users and printers and scanners are interconnected for printing digital print files that have been made in a workstation or scanning documents and transferring the digital scan data files to a workstation. Digital image reproduction apparatuses can advantageously be used as printers and scanners. Such a digital image apparatus includes a scanner unit, a print unit, a memory, and a user interface integrated in the apparatus or remotely usable by an operator. The user interface is provided with an input capability and a display that permit a user to give operator control commands to the apparatus. Further, such a digital reproduction apparatus includes a network connection unit for coupling to a network for the purpose of communication with a digital external environment having at least a number of workstations of users, and a control unit connected to the scanner unit, printer unit, memory and network connection unit, and, via the network connection unit, to the workstations and other printing systems in the network.

Patent applications US2011/292443 A1 and US2009/184456 A1 describe the determination of the first amount of the type of media present in the at least one input holder and the determination of the second amount of the type of media that is intended to be used by the print jobs in the print job queue.

Digital print files include print image data describing the text to be printed and metadata specifying additional properties of the print file, such as the identity of the maker or owner of the print file and settings for finishing the prints in the print unit, for instance simplex or duplex printing, printing on coloured paper, stapling, etc.

Not every printer connected to the network may have the capabilities necessary for printing a print file in accordance with the preprogrammed settings of the print file. Also, the supply of the necessary material, such as staples or coloured paper, may be exhausted.

If a print job is sent to a printer that does not have the necessary capabilities, including sufficient supply of material, the print file may be printed in a different way, or the printer may stop and signal its incompetence by a message on the display in the operating panel. However, there may be printers in the network that would perfectly be able to print the print file according to its settings, and if the print file would be transferred to one of the latter printers, the user would still be satisfied.

It is not always easy to find out at the location of the printer (where the inability of the printer is perceived by an operator), which printers would be able to print the print file according to its settings. Primarily, this is determined by the static situation of installed capabilities of the other printers, but also the dynamic situation of supply and device status is relevant. The information as to printer capabilities of the printers, as well as their status, would be available at the operator's workstation, but then he would have to walk back to his workplace, which causes delay in processing his jobs.

According to US7202962 the operator receives a suggestion of using another printing system in the network and transfer the print job to that other printing system.

According to EP3151106 A1 a stack of media in an input holder is visualised to contain scheduled print jobs.

A problem arises when the print job has already started on the one device, the operator has already edited the print job at the local user interface of the one device, or the one device has unique printing and finishing capabilities intended to be used by the print jobs in the print job queue on the one device, the operator would like to complete the print job on the same device.

### SUMMARY OF THE INVENTION

In relation to the above problems, it is an object of the present invention to provide a method and printing system for digitally processing print jobs in a network system including a plurality of such devices, wherein a lack of media in a device can be dealt with in a simple and comfortable way. The present invention relates to a first method according to claim 1.

If the surplus amount is larger than or equal to the third amount, the information may be that the operator may fetch the whole third amount from the input holders of the printing system. If the surplus amount is smaller than the third amount, the information may be that only the surplus amount may be fetched from the input holders of the printing system.

The displayed surplus may be positive, i.e. larger than 0. In that case media may be taken out of the at least one input holder without affecting the printing of the print jobs in the print job queue.

The displayed surplus may be negative, i.e. smaller than 0. In that case there is a shortage of media for the print jobs in the print job queue and a media request notification may be issued to an operator control system or may be sent to other printing systems.

According to an embodiment the positive surplus amount is numerically displayed on the display of the user interface. By doing so, the surplus amount is quantified in an exact way and can be easily compared with other amounts of media present in other printing systems.

According to an embodiment the steps of the method are repeated according to a predetermined time frequency. By doing so, print jobs which are executed in time and which consume media from the input holders are taken into account when determining the surplus of media types. The determination may be considered as a continuous action.

The present invention also relates to a second method for digitally processing print jobs by means of a printing system comprising at least one input holder for types of media to be printed upon, a user interface provided with operating means and a display, and a print controller for controlling a print job queue for scheduling print jobs to be printed by the printing system, the method comprising the steps of for each media type present in the at least one input holder
- determining a first amount of the type of media present in the at least one input holder,
- determining a second amount of the type of media that is intended to be used by at least one print job in the print job queue,
- determining a shortage amount of the type of media based on the determined first amount and the determined second amount,
- storing the shortage amount in electronic storage of the print controller, and
- displaying the shortage amount on the display of the user interface, and the method characterized by further compirsing the steps of
- sending via a network a notification to at least one other printing system to request for an amount of the type of media equal to the shortage amount,
- receiving from at least one other printing system in the network a positive surplus amount of the media type present in the other printing system, the positive surplus amount of the media type based on an amount of the type of media present in the at least one input holder of the at least one other printing system and an amount of the type of media that is intended to be used by print jobs in the print job queue of the at least one other printing system,
- comparing the received positive surplus amount with the shortage amount, and
- displaying information about the at least one other printing system and the positive surplus amount on the display of the user interface.

According to an embodiment of the second method, the second method comprises the steps of
- receiving location information from each of the at least one other printing system, and
- determining a closest printing system in distance from the at least one other printing system, which closest printing system also has a sufficient surplus amount of the media type.

According to an embodiment of the second method, the second method comprises the step of sending a second notification to the other printing system, the second notification prohibiting the other printing system consuming any media type corresponding to the shortage. This is advantageous when completion of print jobs in a print job queue of the printing system has a high priority.

The present invention also relates to a printing system for digitally processing print jobs, the printing system comprising at least one input holder for types of media to be printed upon, a user interface provided with operating means and a display, and a print controller comprising storage and for controlling a print job queue for scheduling print jobs to be printed by the printing system,
wherein the print controller is configured for each media type present in the at least one input holder to:
   - determine a first amount of the type of media present in the at least one input holder,
   - determine a second amount of the type of media that is intended to be used by print jobs in the print job queue,
   - determine a positive surplus amount of the type of media based on the determined first amount and the determined second amount,
wherein the print controller comprises electronic storage for storing the positive surplus amount and the display of the user interface is configured to display the positive surplus amount, and
wherein the printing system is connected to a network to which another printing system is connected and the print controller is configured
   - to receive via the network a notification from the other printing system that there is a shortage of a third amount of a certain media type with respect to print jobs intended to be printed by means of the other printing system,
   - to compare the third amount of the certain media type with the positive surplus amount of the same media type whether or not being present in the printing system, and
   - to submit information about the positive surplus amount to the other printing system via the network.

According to a further embodiment of the printing system, the print controller is configured to submit the information about the surplus amount to an electronic cloud environment to which the other printing system has access via the network.

The present invention also relates to a printing system for digitally processing print jobs, the printing system comprising at least one input holder for types of media to be printed upon, a user interface provided with operating means and a display, and a print controller for controlling a print job queue for scheduling print jobs to be printed by the printing system,
the print controller being configured for each media type present in the at least one input holder to:
   - determine a first amount of the type of media present in the at least one input holder,
   - determine a second amount of the type of media that is intended to be used by at least one print job in the print job queue,
   - determine a shortage amount of the type of media based on the determined first amount and the determined second amount,
wherein the print controller comprises electronic storage for storing the shortage amount and the display of the user interface is configured to display the shortage amount, characterized in that
the print controller is configured to
   - send via a network a notification to other printing systems to request for an amount of the type of media equal to the shortage amount,
   - receive from at least one other printing system in the network a positive surplus amount of the media type present in the other printing system, the positive surplus amount of the media type based on an amount of the type of media present in the at least one input holder of the at least one other printing system and an amount of the type of media that is intended to be used by print jobs in the print queue of the at least one other printing system, and
   - compare the received positive surplus amount with the shortage amount, and
the user interface is configured to display information about the other printing system and the positive surplus amount on the display of the user interface.

The present invention also relates to a software product comprising program code on a computer-readable non-transitory medium, which program code, when loaded into a print controller of a printing system according to the invention causes the print controller to perform the method according to the invention.

Further scope of applicability of the present invention will become apparent from the detailed description given hereinafter. However, it should be understood that the detailed description and specific examples, while indicating preferred embodiments of the invention, are given by way of illustration only, since various changes and modifications will become apparent to those skilled in the art from this detailed description.

### BRIEF DESCRIPTION OF THE DRAWINGS

The present invention will become more fully understood from the detailed description given herein-below and the accompanying drawings which are given by way of illustration only, and thus are not limitative of the present invention, and wherein:
FIG. 1 shows schematically network comprising a printing system in which the method according to the invention is applicable;
FIG. 2 shows schematically a user interface window for representing the print job queue of the printing system according to the invention;
FIG. 3 shows schematically a user interface window for representing an input tray of the printing system according to the invention;
FIG. 4 shows schematically a user interface window for representing an input roll of the printing system according to the method of the invention; and
FIG. 5 shows schematically a user interface window for representing a notification comprising the surplus amounts of other printing systems according to a method of the invention;
FIG. 6 shows a flow diagram of a method according to the invention; and
FIG. 7 shows a flow diagram of a second method according to the invention.

### DETAILED DESCRIPTION OF PREFERRED EMBODIMENTS

A number of embodiments will now be described in conjunction with the drawings, in which same reference numerals refer to like elements.

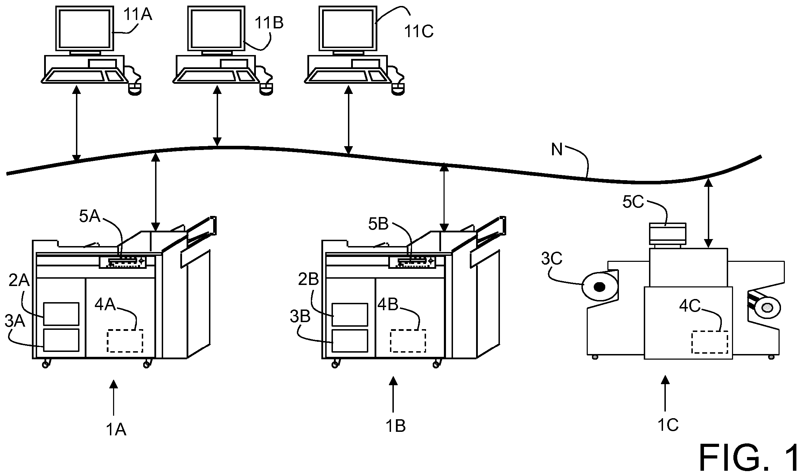

FIG. 1 shows schematically a printing system 1A in which the method according to the invention is applicable. The printing system 1A comprises at least one input holder 2A, 3A for holding media which is intended to be used for printing of print jobs from the print job queue of the printing system 1A. The media in the least one input holder 2A, 3A is transported to a print engine of the printing system 1A. The printing system 1A also comprises a local user interface 5A. While a specific printing system is shown and described, the disclosed embodiments may be used with other types of a printing system such as an inkjet printing system, an electrographic printing system, a cut sheet printing system, a roll fed printing system, etc.

The operator can take a stack of unprinted media from the input holder 2A, 3A for processing of the stack of unprinted media in another printing system, for example a printing system 1B as shown in FIG. 1. The printing system 1B also comprises a local user interface 5B, and at least one input holder 2B, 3B.

Another printing system 1C is also connected to the network N. The printing system 1C comprises an input roll holder for holding an input roll 3C, a user interface 5C and a print controller 4C for controlling the printing process on the input roll 3C and maintaining a print job queue residing in the print controller 4C.

The printing systems 1A, 1B, 1C are digitally connected to a network N for bi-directional data signal transfer. The printing systems 1A, 1B, 1C comprise a print controller 4A, 4B, 4C respectively for controlling the printing process. The print controller 4A, 4B, 4C is a computer or server or a workstation, connected to the print engine of the printing system 1A, 1B, 1C respectively and connected to the digital environment of the printing system, for example the network N for transmitting a submitted print job to the printing system. In FIG. 1 the print controllers 4A, 4B, 4C are positioned inside the printing systems 1A, 1B, 1C respectively, but in an embodiment not part of the claimed invention the print controllers may also be positioned outside the printing systems 1A, 1B, 1C in connection with the network N, for example in at least one of the workstations 11A, 11B, 11C. A print engine of the printing system 1A, 1B, 1C comprises a print head or print assembly for ejecting and/or fixing marking material to media and a paper path for transporting the media from the input holders 2A, 2B, 3A, 3B, 3C to the print head or print assembly. The print head or print assembly may be an inkjet print head, a direct imaging toner assembly or an indirect imaging toner assembly. While a media type is transported along the paper path, the media type receives the marking material from the print head or print assembly before the printed media is output in an output holder.

The local user interface 5A, 5B, 5C is suitable for displaying user interface windows for controlling the print job queue residing in the print controller 4A, 4B, 4C respectively. In another embodiment a computer in the network N has a user interface for displaying and controlling the print job queue of the printing systems 4A, 4B, 4C like the work stations 11A, 11B, 11C in FIG. 1.

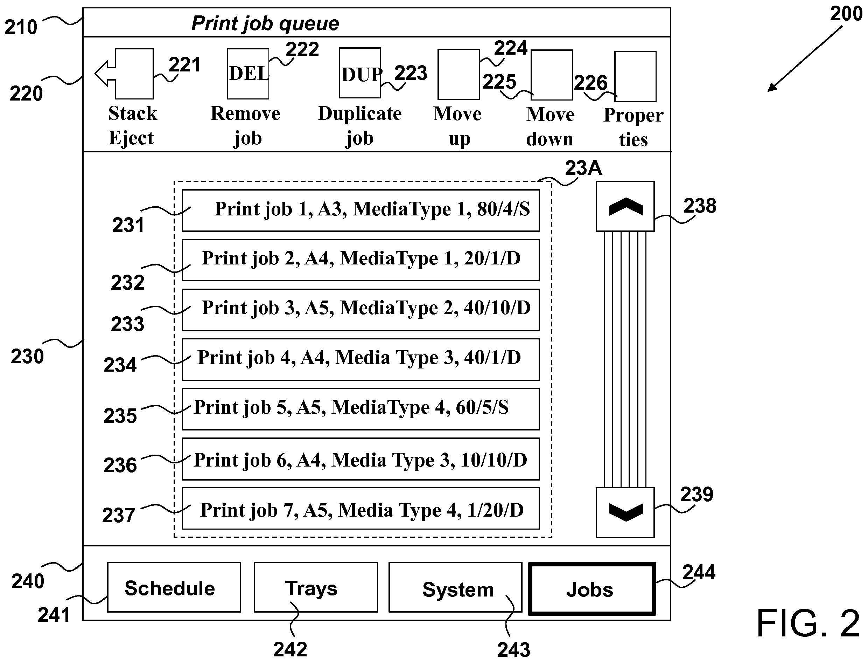

FIG. 2 shows an example of a user interface window 200 of the printing system 1A according to the present invention. In an alternative embodiment part of the functionality - like buttons - of this user interface window is designed as hardware buttons near the user interface window 200. The user interface window 200 is opened at the local user interface 5A in FIG. 1 and shows a representation of the print job queue residing in the print controller 4A in FIG. 1.

The user interface window 200 comprises a title section 210, a user action section 220, a print job queue section 230 and a navigation section 240.

The user action section 220 comprises image items 221 - 226 to be selected for executing actions on the print job queue 23A of the printing system 1A in the print job queue section 230.

A first image item 221 represents a stack ejection action for ejecting a stack of printed media from an output holder of the printing system 1A.

A second image item 222 represents a job removal action.

A third image item 223 represents a job duplication action.

A fourth image item 224 represents a move up action.

A fifth image item 225 represents a move down action.

A sixth image item 226 represents an action to retrieve and display properties of a selected print job in a properties window.

The navigation section 240 comprises a first image item 241 for navigating to a schedule with a timeline and media needed for the print jobs, a second image item 242 for navigating to an overview of the input trays and the amounts of media types in the input trays, a third image item 243 for navigating to the system settings and a fourth image item 244 for navigating to the print jobs in the print job queue 23A. In the user interface window 200 the fourth image item 244 titled "Jobs" is selected and the jobs in the print job queue 23A are shown.

The print job queue section 230 comprises a representation of the print job queue 23A. The print job queue 23A comprises at least one print job. FIG. 2 shows a plurality of print jobs 231 - 237 in the print job queue 23A in a sequence order from top to bottom. A first print job 231 will be printed real soon after the print job that is currently printed by the printing device is ready. A last print job 237 will be printed if the preceding print jobs 231 -236 are ready. Each print job 231 - 237 in the print job queue 23A is selectable by a mouse or by a finger or stylus in case of a touch screen. A sequence order of the print jobs 231 - 237 in the print job queue 23A may be changed by selecting a print job in the print job queue 23A and then activating the fourth image item 224 or the fifth image item 225 in order to move the selected print job one position up or down respectively in the print job queue 23A. In another embodiment in case of a touch screen a position of a print job 231 - 237 in the print job queue 23A may be changed by dragging and dropping the appropriate print job to another position in the print queue. The print job queue 23A is scrollable by activating an upward scrolling button 238 or a downward scrolling button 239. Each print job 231 - 237 in the print job queue 23A may be displayed with a number of properties of the print job, such as an identifying name of the print job ("Print job 1"), a size of the image receiving material to be used for the print job ("A3"), a media type to be used for the corresponding print job ("Media Type 1"), a number of pages, a number of sets and a simplex/duplex print mode ("80/4/S"), etc. For convenience reasons a small relevant number of properties for each print job 231 - 237 is displayed in the print job queue 23A.

Per media type an amount of media of the media type in the input holders is known to the print controller 4A by means of sensors, counters or the like. For example, media type 1 may have 500 sheets in the input holder 2A of the printing system 1A.

Per media type an amount of the media type intended to be used by the print jobs scheduled in the print job queue is easily determined. For example, media type 1 is used in print job 1 and 2 and will consume 80*4 + 20*1/2 = 330 sheets.

The surplus amount of media type 1 would therefore be equal to 500 - 330 = 170 sheets which are surplus sheets in the input holder 2A of printing system 1A in the case that the input holder 2A is completely filled.

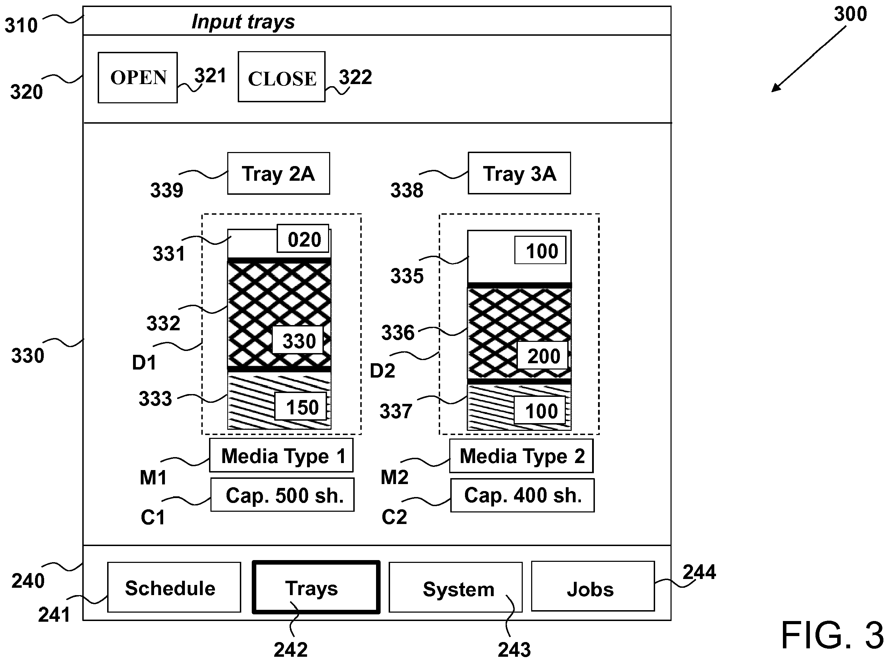

FIG. 3 shows a user interface window 300 comprising an overview of the input trays 2A, 3A of the printing system 1A. This overview appears on the user interface 5A of the printing system 1A when the second image item 242 in FIG. 2 titled "Trays" is selected.

The user interface window 300 comprises a title section 310, a user action section 320, an input tray section 330 and again the navigation section 240.

The user action section 320 comprises image items 321 - 322 to be selected for executing actions on the input trays 2A, 3A of the printing system 1A shown in the input tray section 330.

A first image item 321 represents an open action for automatically opening a selected input holder of the printing system 1A.

A second image item 322 represents a close action for automatically closing a selected input holder of the printing system 1A.

The input tray section 330 comprises a first button 339 titled "Tray 2A" for selecting the first input tray 2A of the printing system 1A and a second button 338 titled "Tray 2B" for selecting the second input tray 2B of the printing system 1A.

The input tray section 330 comprises a first indication item M1 titled "Media Type 1" for indicating a media type that is present in the first input tray 2A of the printing system 1A and a second indication item M2 titled "Media Type 2" for indicating a media type that is present in the second input tray 2B of the printing system 1A.

The input tray section 330 comprises a first indication item C1 titled "Cap. 500 sh." which indicates a sheet capacity of sheets of media type 1 in the first input tray 2A of the printing system 1A and a second indication item C2 titled "Cap. 400 sh." which indicates a sheet capacity of sheets of media type 2 in the second input tray 3A of the printing system 1A. The sheet capacity C1 is deviating from the sheet capacity C2 due to a different media type thickness of a sheet of media type 1 and 2. In this example the heights of the input trays 2A and 3A are equal. However, a sheet capacity of an input tray may besides a difference in media type properties also vary due to a different volume - in particular a different height - of the input tray.

The input tray section 330 comprises a first representation item D1 for representing a volume of the first input tray 2A of the printing system 1A and a second representation item D2 for representing a volume of the second input tray 2B of the printing system 1A. The representation items D1, D2 each comprise three parts of the volume of the input tray.

A first part 331 of the volume D1 of the input tray 2A represents empty space. This is the space which is not occupied by media. The empty space may be interpreted as the space which may be used to fill the input tray 2A up to a full input tray, i.e. to a maximum height determined by the volume and/or capacity of the input tray 2A.

A second part 332 of the volume D1 of the input tray 2A represents media present in the input tray 2A that is intended to be consumed for the print jobs in the print job queue which have specified media type 1 as media to be printed upon.

A third part 333 of the volume D1 of the input tray 2A represents media present in the input tray 2A that is a surplus amount of media of media type 1, i.e. media which is not to be consumed for the print jobs in the print job queue which have specified media type 1 as media to be printed upon.

The amount of media in the second part 332 and the third part 333 of volume D1 determine the total amount of media of media type 1 present in the input tray 2A.

The volume D1 is depicted in a stacked bar in a certain order of the parts. Other orders of the parts may be envisioned. Also another representation like unstacked bars or a pie chart may be applied.

A first part 335 of the volume D2 of the input tray 3A represents empty space. This is the space which is not occupied by media. The empty space may be interpreted as the space which may be used to fill the input tray 3A up to a full input tray, i.e. to a maximum height determined by the volume and/or capacity of the input tray 3A.

A second part 336 of the volume D2 of the input tray 3A represents media present in the input tray 3A that is intended to be consumed for the print jobs in the print job queue which have specified media type 2 as media to be printed upon.

A third part 337 of the volume D2 of the input tray 3A represents media present in the input tray 3A that is a surplus amount of media of media type 2, i.e. media which is not to be consumed for the print jobs in the print job queue which have specified media type 2 as media to be printed upon.

The amount of media in the second part 336 and the third part 337 of volume D2 determine the total amount of media of media type 2 present in the input tray 3A.

The volume D2 is depicted in a stacked bar in a certain order of the parts. Other orders of the parts may be envisioned. Even another representation like unstacked bars or a pie chart may be applied.

The first part 331 of the volume D1 of the input tray 2A representing empty space also comprises a numerical indication ("020") of a number of sheets of media type 1 that may be additionally loaded in the input tray 2A to a maximum height, i.e. 500 sheets of media type 1, determined by the volume and/or capacity of the input tray 2A and the media sheet thickness of media type 1.

According to another embodiment the first part 331 of the volume D1 is left out of the volume representation D1 because it can be directly calculated from the second part 332, the third part 332 and the capacity C1 of input tray 2A.

The second part 332 of the volume D1 of the input tray 2A representing media present in the input tray 2A that is intended to be consumed for the print jobs in the print job queue which have specified media type 1 as media to be printed upon, also comprises a numerical indication ("330") of a number of sheets that are intended to be used by said print jobs.

The third part 333 of the volume D1 of the input tray 2A representing media present in the input tray 2A that is the surplus amount of media of media type 1 also comprises a numerical indication ("150") of the number of sheets of media type 1 which is intended not to be consumed by the print jobs in the print job queue which have specified media type 1 as media to be printed upon.

The amount of media in the second part 332 and the third part 333 of volume D1 determine the total amount of media of media type 1 present in the input tray 2A, which is 330 + 150 = 480 sheets of media type 1.

The first part 335 of the volume D2 of the input tray 3A representing empty space also comprises a numerical indication ("100") of a number of sheets of media type 2 that may be additionally loaded in the input tray 3A to a maximum height, i.e. 400 sheets of media type 2, determined by the volume and/or capacity of the input tray 3A and the media sheet thickness of media type 2.

According to another embodiment the first part 335 of the volume D2 is left out of the volume representation D2 because it can be directly calculated from the second part 336, the third part 337 and the capacity C2 of input tray 3A.

The second part 336 of the volume D2 of the input tray 3A representing media present in the input tray 3A that is intended to be consumed for the print jobs in the print job queue which have specified media type 2 as media to be printed upon, also comprises a numerical indication ("200") of a number of sheets that are intended to be used by said print jobs.

The third part 337 of the volume D2 of the input tray 3A representing media present in the input tray 3A that is the surplus amount of media of media type 2 also comprises a numerical indication ("100") of the number of sheets of media type 2 which is intended not to be consumed by the print jobs in the print job queue which have specified media type 2 as media to be printed upon.

The amount of media in the second part 336 and the third part 337 of volume D2 determine the total amount of media of media type 2 present in the input tray 3A, which is 200 + 100 = 300 sheets of media type 2.

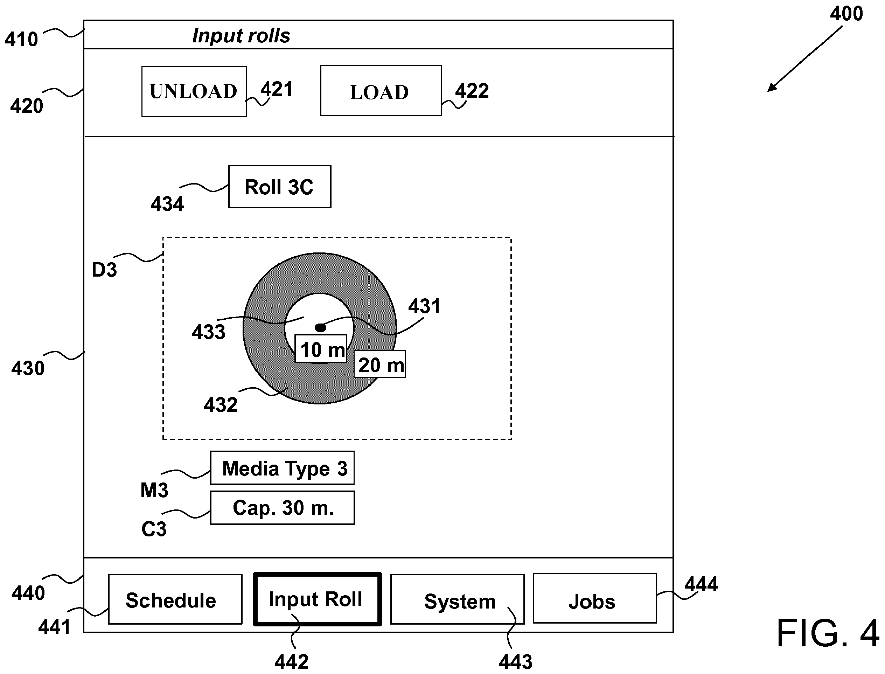

FIG. 4 shows a user interface window 400 of the printing system 1C according to the present invention. In an alternative embodiment part of the functionality - like buttons - of this user interface window is designed as hardware buttons near the user interface window 400. The user interface window 400 is opened at the local user interface 5C in FIG. 1 and shows a representation of the input roll 3C in FIG. 1.

The user interface window 400 comprises a title section 410, a user action section 420, an input roll section 430 and a navigation section 440.

The user action section 420 comprises image items 421 - 422 to be selected for executing actions on the input roll 3C of the printing system 1C in the input roll section 430.

A first image item 421 represents an unload action of the input roll 3C from the input roll holder of the printing system 1C.

A second image item 422 represents a load action of the input roll 3C on the input roll holder of the printing system 1C.

The navigation section 440 comprises a first image item 441 for navigating to a schedule with a timeline and media needed for the print jobs, a second image item 442 for navigating to an overview of the input roll 3C and the amount of media type on the input roll 3C, a third image item 443 for navigating to the system settings and a fourth image item 444 for navigating to the print jobs in a print job queue of the printing system 1C. In the user interface window 400 the second image item 442 titled "Input Roll" is selected and the representation of the input roll 3C is shown.

The input roll section 430 comprises a text item 434 titled "Roll 3C". Since there is only one input roll in the printing system 1C the text item 434 is not selectable and the input roll 3C is automatically selected.

The input roll section 430 comprises a first indication item M3 titled "Media Type 3" for indicating a media type that is present on the input roll 3C of the printing system 1C. The input roll section 430 comprises a first indication item C3 titled "Cap. 30 m." which indicates a media capacity in roll length units of media type 3 on the input roll 3C of the printing system 1C. So the media capacity on the input roll 3C is 30 m.

The input tray section 430 comprises a first representation item D3 for representing a volume of the input roll 3C of the printing system 1C. The representation item D3 comprises three parts of the volume of the input roll 3C.

A first part 431 of the volume D3 of the input roll 3C represents a core of the input roll 3C on which the media of media type 3 is wrapped.

A second part 432 of the volume D3 of the input roll 3C represents media present on the input roll 3C that is intended to be consumed for the print jobs in the print job queue which have specified media type 3 as media to be printed upon.

A third part 433 of the volume D3 surrounding the core 431 of the input roll 3C represents media present on the input roll 3C that is a surplus amount of media of media type 3, i.e. media which is not to be consumed for the print jobs in the print job queue which have specified media type 3 as media to be printed upon.

The amount of media in the second part 432 and the third part 433 of volume D3 determine the total amount of media of media type 3 present on the input roll 3C.

The volume D3 is depicted in a segmented circle in a certain order of the parts. Other orders of the parts may be envisioned. Also another representation like stacked bars, unstacked bars or a pie chart may be applied.

The second part 432 of the volume D3 of the input roll 3C representing media present on the input roll 3C that is intended to be consumed for the print jobs in the print job queue which have specified media type 3 as media to be printed upon, also comprises a numerical indication ("20 m") of a number of length units - for example meters - of the media type 3 that are intended to be used by said print jobs.

The third part 433 of the volume D3 of the input roll 3C representing media present on the input roll 3C that is the surplus amount of media of media type 3 also comprises a numerical indication ("10 m") of a number of length units - for example meters - of the media type 3 which is intended not to be consumed by the print jobs in the print job queue which have specified media type 3 as media to be printed upon.

The amount of media in the second part 432 and the third part 433 of volume D3 determine the total amount of media of media type 3 present on the input roll 3C, which is 20 m. + 10 m. = 30 m. of media type 3.

According to an embodiment the media amounts of the parts 331, 332, 333, 335, 336, 337, 432, 433 are determined according to a predetermined time frequency. By doing so, print jobs which are executed in time and which consume media from the input trays 2A, 3A or from the input roll 3C are taken into account when determining the surplus of media types. The determination may be considered as an approximately continuous action.

For example, when a print job is printed on the printing system 1A and consuming media type 1, the amount of the first part 331 will increase, the amount of the second part 332 will decrease and the surplus amount of the third part 333 will remain the same.

For example, when a print job is entering the print job queue of the printing system 1A which is intended to consume media type 1, the amount of the first part 331 will remain the same, the amount of the second part 332 will increase and the surplus amount of the third part 333 will decrease.

For example, when a scheduled print job is removed from the print job queue of the printing system 1A which is intended to consume media type 1, the amount of the first part 331 will remain the same, the amount of the second part 332 will decrease and the surplus amount of the third part 333 will increase.

For example, when media sheets of media type 1 are additionally loaded in the input tray 2A of the printing system 1A, the amount of the first part 331 will decrease, the amount of the second part 332 will remain the same and the surplus amount of the third part 333 will increase.

For example, when media sheets of media type 1 are unloaded from the input tray 2A of the printing system 1A, the amount of the first part 331 will increase, the amount of the second part 332 will remain the same and the surplus amount of the third part 333 will decrease.

According to the present invention the printing system 1A is connected to the network N to which another printing system 1B shown in FIG. 1 is connected. In the case that printing system 1B has a shortage of media type 1 or media type 2 for printing the print jobs in the print queue of the printing system 1B, the printing system 1B sends a media request notification to any printing system in the network N, for example printing system 1A. Printing system 1A receives via the network N the notification from the printing system 1B that there is a shortage of a third amount of media type 1 with respect to print jobs intended to be printed by means of the printing system 1B. The third amount may be for example 100 sheets of media type 1. The print controller 4A of printing system 1A compares the third amount of 100 sheets of the media type 1 with the surplus amount of the same media type 1 present in the printing system 1A being 150 sheets according to the third part 333 in FIG. 3. The printing system 1A is then submitting information about the surplus amount of 150 sheets to the printing system 1B via the network N.

Since the surplus amount of 150 sheets is larger than the needed amount of 100 sheets, an operator may be notified via the user interface 5B of the printing system 1B that he can fetch the whole third amount of 100 sheets from the input tray 2A of the printing system 1A. According to an embodiment the information about the surplus amount is not sent to the printing system 1B, but to a robotic vehicle which is a slave device for the printing system 1B, in order to let the robotic vehicle fetch the surplus amount of sheets of media type 1 from the printing system 1A.

In a case that the surplus amount 333 shown in FIG. 3 would be smaller than the third amount, for example 50 sheets, the information may be that only the surplus amount of 50 sheets may be fetched from the input holders of the printing system 1A.

In case a plurality of printing systems is connected to the network N, the printing system 1B having a shortage may send the notification to all other printing systems in the network N in order to enlarge the chance that there is anywhere a surplus amount of the third amount of media type 1.

According to an embodiment the printing system 1B also receives location information from each of the other printing systems. If there are more than one printing system having a surplus amount of media type 1 larger than or equal to the third amount, the print controller 4B of the printing system 1B may determine the printing system being closest in distance from the printing system 1B in order to reduce the operator moving time needed for fetching the third amount from one of the other printing systems.

When an operator is fetching the third amount from another printing system, for example printing system 1A, he may have a look at the user interface 5A of the printing system 1A in order to check the surplus amount 333 on the user interface window 300 at that very moment. Namely, it may happen that sheets of media type 1 have been consumed, when the operator was moving from printing system 1B to printing system 1A. Since the surplus amount may be continuously updated by the printing system 1A, the operator is at that moment aware of the actual surplus amount at operator arrival at the printing system 1A.

According to another embodiment the shortage request also comprises location information of printing system 1B. By doing so, the printing system 1A is able to calculate a distance from printing system 1A to printing system 1B. From the distance an operator moving time may be calculated for moving from printing system 1B to printing system 1A. The print controller 4A of the printing system 1A can check in the print job queue of the printing system 1A how much media of media type 1 are going to be consumed in the operator moving time. If the surplus amount is than getting lower than the needed third amount, the printing system 1A may send a notification to the printing system 1B that the printing system 1A is not able to unload the needed third amount of sheets of media type 1 when the operator would arrive at the printing system 1A. In the latter case the printing system 1A may be configured to send no reaction to the media request of the printing system 1B.

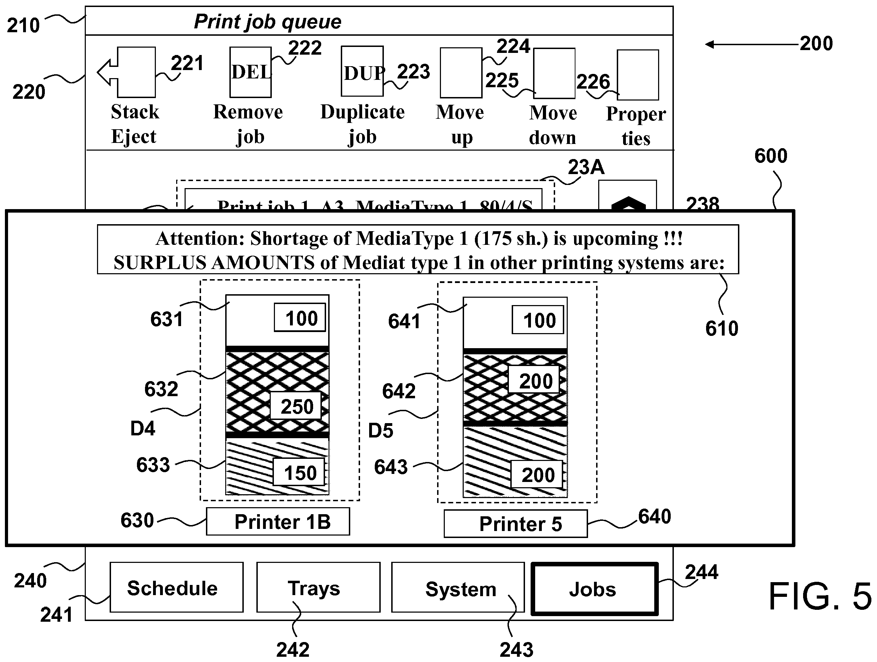

FIG. 5 shows again the user interface window 200 of the printing system 1A as in FIG. 2. The print controller 4A of the printing system 1A has detected an upcoming shortage of media type 1 for print jobs to be printed by the printing system 1A. The upcoming shortage of media type 1 has for example been establishing after a few print jobs have entered the print job queue 23A of printing system 1A which are intended to use media of media type 1 during printing of these few print jobs.

The print controller 1A has sent a media request to other printing systems in the network and has received from two other printing systems, namely printing systems 1B and 5 (not shown) surplus amounts of the media type 1 present in the two other printing systems 1B, 5.

A notification window 600 has appeared to notify an operator of the upcoming shortage and to display the amount of shortage ("175") in a notification message item 610.

The notification window 600 also comprises representations D4, D5 of the received surplus amounts 633, 643 of the media type 1 in the other printing systems 1B, 5 respectively in the network N.

Besides the received surplus amounts 633, 643 the media amounts 632, 642 intended to be used by scheduled print jobs in the printing systems 1B, 5 respectively may be received and shown in the representations D4, D5.

Besides the received surplus amounts 633, 643 the empty spaces 631, 641 in the input holders of the printing systems 1B, 5 may be received and shown in the representations D4, D5 respectively.

The representations D4, D5 are similar to the representations of the input holders for the printing system itself as shown in FIG. 3.

Label items 630, 640 indicate an identification of the other printing systems 1B, 5 respectively. The label items 630, 640 may be user operable items. For example, when clicking on a label 630 of printing system 1B an additional window (not shown) comprising location information about the printing system 1B may pop up. The location information may be a position of the printing system 1B in a print environment. In this way the operator is able to estimate the operator moving time for fetching an amount of sheets of media type 1 from printing system 1B. The location information may also comprise a position or identification of the input holder which contains the sheets of media type 1 since the printing system 1B has more than one input holder, namely input holders 2B and 3B. By doing so, the operator also knows which input holder comprises the surplus amount of media type 1.

Since the shortage amount is "175 sheets" and the surplus amounts in printing systems 1B, 5 are respectively "150 sheets" and "200 sheets", the operator may select printing system 5 in order to fetch the shortage amount of 175 sheets.

In a case that the shortage amount of the printing system is larger than each of the surplus amounts of the other printing systems, the operator may consider to fetch amounts of sheets of media type 1 from more than one other printing system. For example, if the shortage amount is "250 sheets", the operator may fetch 100 sheets of media type 1 from printing system 1A and 150 sheets of media type 1 from printing system 5, or the operator may fetch 150 sheets of media type 1 from printing system 1A and 100 sheets of media type 1 from printing system 5, etc.

In FIG. 5 surplus amounts are received from two other printing systems 1B, 5. However, in the scope of the invention, any other number of printing systems (1,3,4,5,..) connected to the network may receive the media request from printing system 1A, and thus any other number of representations of the surplus amounts (1,3,4,5,...) may be shown in the notification window 600.

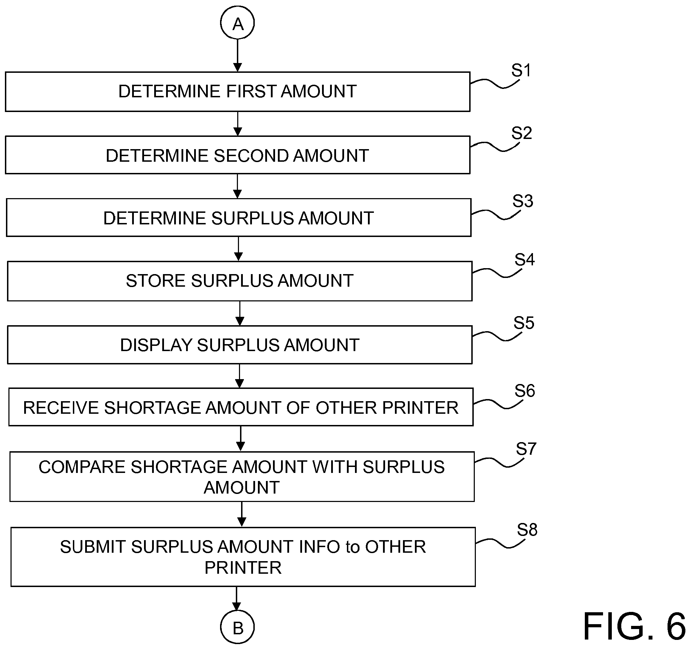

FIG. 6 shows a flow diagram of the method according to an embodiment of the present invention. The method is applicable to each type of media present in an input holder of the printing system according to the invention.

The method starts in a starting point A and leads to a first step S1.

In the first step S1 the print controller of the printing system determines a first amount of the type of media present in the input holder.

In a second step S2 the print controller of the printing system determines a second amount of the type of media that is intended to be used by print jobs in the print job queue.

In a third step S3 the print controller determines a surplus amount of the type of media based on the determined first amount and the determined second amount.

In a fourth step S4 the print controller stores the surplus amount in the storage of the print controller. The print controller may also store the first amount and the second amount.

In a fifth step S5 the user interface displays the surplus amount on the display of the user interface.

In a sixth step S6 the printing system receives via the network a notification from another printing system that there is a shortage of a third amount of the media type with respect to print jobs intended to be printed by means of the other printing system.

In a seventh step S7 the print controller compares the third amount of the media type with the surplus amount of the same media type whether or not being present in the input holder of the printing system.

In an eighth step S8 the print controller submits information about the surplus amount to the other printing system via the network. The information may comprise the number of sheets or length units of a roll being the surplus amount in the input holder of the printing system. The information may also comprise the location of the printing system and a relevant input holder identification when more than input holder is involved. The information may also comprise a distance from the printing system to the other printing system. According to a further embodiment the surplus amount information is conditionally sent to the other printing system. For example the information is only sent if the surplus amount is larger than 0. Or, for example, the information is only sent if the surplus amount is larger than or equal to the third amount.

The method ends in an end point B.

The sequence order of the steps S1 - S8 may be varied. For example, the sequence order may be S6, S1 - S4, S7, S8, S5.

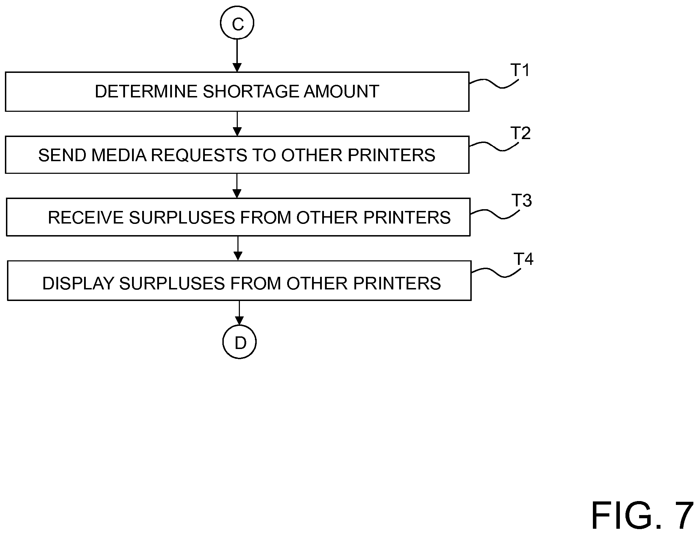

FIG. 7 shows a flow diagram of the second method according to an embodiment of the present invention. The second method is applicable to each type of media present in an input holder of a printing system in a network.

The method starts in a starting point C and leads to a first step T1.

In the first step T1 the print controller of the printing system determines a shortage amount of the type of media for an input holder of the printing system.

In a second step T2 the print controller sends a media request for the media type to other printers connected to the network. The media request comprises the shortage amount, the media type and optionally the location of the printing system in the print environment.

In an embodiment not within the claimed invention, the second step T2 may be optional: other printers may automatically send the surplus amounts to the printing system and do not have to wait for a media request from the printing system.

In another embodiment the media request is sent to another dedicated storage place, for example in the cloud. Printing systems may be configured to send their surplus amounts to the other dedicated storage place.

In a third step T3 the print controller of the printing system receives surplus amounts of the media types of the other printing systems. The print controller may also receive location information of the other printers.

In a fourth step T4 the user interface of the printing system displays the surplus amounts of the other printers on a display for the operator. The operator may decide from which other printer or printers the shortage amount will be fetched. The display may also show a distance from the printing system to the other printing system(s).

The method ends in an end point D.

The invention being thus described, it will be obvious that the same may be varied in many ways. Such variations and modifications as would be obvious to one skilled in the art are intended to be included so long as they fall within the scope of the following claims

## Claims

1. A method of digitally processing images by means of a printing system (1A, 1B, 1C) comprising at least one input holder (2A, 3A, 2B, 3B, 3C) for types of media to be printed upon, a user interface (5A, 5B, 5C) provided with operating means and a display, and a print controller (4A, 4B, 4C) comprising storage and for controlling a print job queue (23A) comprising at least one print job scheduled to be printed by the printing system (1A, 1B, 1C),
the method comprising the steps of
for each type of media present in the at least one input holder:
- determining (S1) a first amount of the type of media present in the at least one input holder,
- determining (S2) a second amount (332, 336, 432) of the type of media that is intended to be used by print jobs in the print job queue,
- determining (S3) a positive surplus amount (333, 337, 433) of the type of media based on the determined first amount and the determined second amount,
- storing (S4) the positive surplus amount in the storage of the print controller, and
- displaying (S5) the positive surplus amount on the display of the user interface,
wherein the printing system is connected to a network (N) to which another printing system is connected and the method comprises the steps of
- receiving (S6) via the network a notification from the other printing system that there is a shortage of a third amount of a certain media type with respect to print jobs intended to be printed by means of the other printing system,
- comparing (S7) the third amount of the certain media type with the positive surplus amount of the same media type whether or not being present in the printing system, and
- submitting (S8) information about the positive surplus amount to the other printing system via the network.

2. A method according to claim 1, wherein the positive surplus amount is numerically displayed on the display of the user interface.

3. A method according to any of the preceding claims, wherein the steps of the method are repeated according to a predetermined time frequency.

4. A method according to any of the preceding claims, wherein the step of determining the positive surplus amount comprises the sub-step of subtracting the second amount from the first amount.

5. A method for digitally processing print jobs by means of a printing system comprising at least one input holder for types of media to be printed upon, a user interface provided with operating means and a display, and a print controller for controlling a print job queue for scheduling print jobs to be printed by the printing system, the method comprising the steps of
for each media type present in the at least one input holder
- determining a first amount of the type of media present in the at least one input holder,
- determining a second amount of the type of media that is intended to be used by at least one print job in the print job queue,
- determining a shortage amount of the type of media based on the determined first amount and the determined second amount,
- storing the shortage amount in electronic storage of the print controller, and
- displaying the shortage amount on the display of the user interface, and
the method **characterized by** further comprising the steps of
- sending via a network a notification to other printing systems to request for an amount of the type of media equal to the shortage amount,
- receiving from at least one other printing system in the network a positive surplus amount of the media type present in the other printing system, the positive surplus amount of the media type based on an amount of the type of media present in the at least one input holder of the at least one other printing system and an amount of the type of media that is intended to be used by print jobs in the print job queue of the at least one other printing system,
- comparing the received positive surplus amount with the shortage amount, and
- displaying information about the at least one other printing system and the positive surplus amount on the display of the user interface.

6. Method according to claim 5, wherein the method comprises the steps of
- receiving location information from each of the at least one other printing system, and
- determining a closest printing system in distance from the at least one other printing system, which closest printing system also has a sufficient positive surplus amount of the media type.

7. Method according to any of the claims 5 or 6, wherein the method comprises the step of sending a second notification to the at least one other printing system, the second notification prohibiting the at least one other printing system consuming any media type corresponding to the shortage.

8. A printing system for digitally processing print jobs, the printing system comprising at least one input holder for types of media to be printed upon, a user interface provided with operating means and a display, and a print controller comprising storage and for controlling a print job queue for scheduling print jobs to be printed by the printing system,
wherein the print controller is configured for each media type present in the at least one input holder to:
- determine a first amount of the type of media present in the at least one input holder,
- determine a second amount of the type of media that is intended to be used by print jobs in the print job queue, and to
- determine a positive surplus amount of the type of media based on the determined first amount and the determined second amount,
wherein the print controller comprises electronic storage for storing the positive surplus amount and the display of the user interface is configured to display the positive surplus amount, and
wherein the printing system is connected to a network to which another printing system is connected and the print controller is configured
- to receive via the network a notification from the other printing system that there is a shortage of a third amount of a certain media type with respect to print jobs intended to be printed by means of the other printing system,
- to compare the third amount of the certain media type with the positive surplus amount of the same media type whether or not being present in the printing system, and
- to submit information about the positive surplus amount to the other printing system via the network.

9. A printing system according to claim 8, wherein the print controller is configured to submit the information about the positive surplus amount to an electronic cloud environment to which the other printing system has access via the network.

10. A printing system according to any of the claims 8-9, wherein the positive surplus amount is achieved by subtracting the second amount from the first amount.

11. A printing system for digitally processing print jobs, the printing system comprising at least one input holder for types of media to be printed upon, a user interface provided with operating means and a display, and a print controller for controlling a print job queue for scheduling print jobs to be printed by the printing system,
the print controller being configured for each media type present in the at least one input holder to:
- determine a first amount of the type of media present in the at least one input holder,
- determine a second amount of the type of media that is intended to be used by at least one print job in the print job queue, and to
- determine a shortage amount of the type of media based on the determined first amount and the determined second amount,
wherein the print controller comprises electronic storage for storing the shortage amount and the display of the user interface is configured to display the shortage amount, **characterized in that**
the print controller is configured
- to send via a network a notification to at least one other printing system to request for an amount of the type of media equal to the shortage amount, and to
- to receive from at least one other printing system in the network a positive surplus amount of the media type present in the other printing system, the positive surplus amount of the media type based on an amount of the type of media present in the at least one input holder of the at least one other printing system and an amount of the type of media that is intended to be used by print jobs in the print job queue of the at least one other printing system, and
- to compare the received positive surplus amount with the shortage amount, and
the user interface is configured to display information about the other printing system and the positive surplus amount on the display of the user interface.

12. A software product comprising program code on a computer-readable non-transitory medium, which program code, when loaded into a print controller of a printing system according to claims 8-11 causes the print controller to perform the method according to any of the claims 1 to 7.

## Patentansprüche

1. Verfahren zur digitalen Verarbeitung von Bildern mittels eines Drucksystems (1A, 1B, 1C), das mindestens einen Eingabehalter (2A, 3A, 2B, 3B, 3C) für zu bedruckende Medienarten und eine Benutzeroberfläche umfasst (5A, 5B, 5C), ausgestattet mit Bedienmitteln und einer Anzeige, und einer Drucksteuerung (4A, 4B, 4C), die einen Speicher umfasst und zum Steuern einer Druckauftragswarteschlange (23A) dient, die mindestens einen Druckauftrag umfasst, der zum Drucken geplant ist von dem Drucksystem (1A, 1B, 1C),
wobei das Verfahren die folgenden Schritte umfasst:
für jede Art von Medien, die in dem mindestens einen Eingabebehälter vorhanden sind:
- Bestimmen (S1) einer ersten Menge der in dem mindestens einen Eingabebehälter vorhandenen Medienart,
- Bestimmen (S2) einer zweiten Menge (332, 336, 432) des Medienarten, der von Druckaufträgen in der Druckauftragswarteschlange verwendet werden soll,
- Ermitteln (S3) einer positiven Überschussmenge (333, 337, 433) der Medienart basierend auf der ermittelten ersten Menge und der ermittelten zweiten Menge,
- Speichern (S4) des positiven Überschussbetrags im Speicher des Druckcontrollers und
- Anzeigen (S5) des positiven Überschussbetrages auf dem Display der Benutzeroberfläche,
wobei das Drucksystem mit einem Netzwerk (N) verbunden ist, an das ein anderes Drucksystem angeschlossen ist, und das Verfahren die Schritte umfasst:
- Empfangen (S6) über das Netzwerk einer Benachrichtigung vom anderen Drucksystem, dass ein Mangel an einer dritten Menge eines bestimmten Medienarten in Bezug auf Druckaufträge besteht, die mit dem anderen Drucksystem gedruckt werden sollen,
- Vergleichen (S7) der dritten Menge des bestimmten Medienarten mit der positiven Überschussmenge desselben Medienarten, unabhängig davon, ob dieser im Drucksystem vorhanden ist oder nicht, und
- Übermittlung (S8) von Informationen über den positiven Überschussbetrag an das andere Drucksystem über das Netzwerk.

2. Verfahren nach Anspruch 1, wobei der positive Überschussbetrag numerisch auf dem Display der Benutzeroberfläche angezeigt wird.

3. Verfahren nach einem der vorhergehenden Ansprüche, wobei die Schritte des Verfahrens gemäß einer vorgegebenen Zeithäufigkeit wiederholt werden.

4. Verfahren nach einem der vorhergehenden Ansprüche, wobei der Schritt des Bestimmens des positiven Überschussbetrags den Unterschritt des Subtrahierens des zweiten Betrags vom ersten Betrag umfasst.

5. Verfahren zur digitalen Verarbeitung von Druckaufträgen mittels eines Drucksystems, das mindestens einen Eingabehalter für zu bedruckende Medienarten, eine mit Bedienmitteln und einem Display versehene Benutzeroberfläche und einen Druckcontroller zur Steuerung eines Druckauftrags umfasst Warteschlange zum Planen von Druckaufträgen, die vom Drucksystem gedruckt werden sollen, wobei das Verfahren die folgenden Schritte umfasst:
für jeden Medienart, der in dem mindestens einen Eingabebehälter vorhanden ist
- Bestimmen einer ersten Menge der in dem mindestens einen Eingabebehälter vorhandenen Medienart,
- Bestimmen einer zweiten Menge des Medienarten, der von mindestens einem Druckauftrag in der Druckauftragswarteschlange verwendet werden soll,
- Ermitteln einer Fehlmenge der Medienart basierend auf der ermittelten ersten Menge und der ermittelten zweiten Menge,
- Speichern der Fehlmenge im elektronischen Speicher des Druckcontrollers und
- Anzeigen der Fehlmengenmenge auf dem Display der Benutzeroberfläche und wobei das Verfahren **dadurch gekennzeichnet ist, dass** es weiterhin die folgenden Schritte umfasst:
- Senden einer Benachrichtigung über ein Netzwerk an andere Drucksysteme, um eine Menge des Medienarten anzufordern, die der fehlenden Menge entspricht,
- Empfangen einer positiven Überschussmenge des in dem anderen Drucksystem vorhandenen Medienarten von mindestens einem anderen Drucksystem im Netzwerk, wobei die positive Überschussmenge des Medienarten auf einer Menge des in dem mindestens einen vorhandenen Medienarten basiert Eingabehalter des mindestens einen anderen Drucksystems und eine Menge des Medienarten, der von Druckaufträgen in der Druckauftragswarteschlange des mindestens einen anderen Drucksystems verwendet werden soll,
- Vergleichen des erhaltenen positiven Überschussbetrags mit dem Fehlbetrag und
- Anzeigen von Informationen über das mindestens eine andere Drucksystem und den positiven Überschussbetrag auf dem Display der Benutzeroberfläche.

6. Verfahren nach Anspruch 5, wobei das Verfahren die Schritte umfasst:
- Empfangen von Standortinformationen von jedem der mindestens einen anderen Drucksysteme und
- Bestimmen eines nächstliegenden Drucksystems im Abstand zu dem mindestens einen anderen Drucksystem, wobei das nächstliegende Drucksystem ebenfalls über eine ausreichende positive Überschussmenge des Medienarten verfügt.

7. Verfahren nach einem der Ansprüche 5 oder 6, wobei das Verfahren den Schritt des Sendens einer zweiten Benachrichtigung an das mindestens eine andere Drucksystem umfasst, wobei die zweite Benachrichtigung dem mindestens einen anderen Drucksystem verbietet, einen entsprechenden Medienart zu verbrauchen der Mangel.

8. Ein Drucksystem zur digitalen Verarbeitung von Druckaufträgen, wobei das Drucksystem mindestens einen Eingabehalter für zu bedruckende Medienarten, eine mit Bedienmitteln und einem Display versehene Benutzeroberfläche und eine Drucksteuerung mit Speicher und zur Steuerung von a umfasst Druckauftragswarteschlange zum Planen von Druckaufträgen, die vom Drucksystem gedruckt werden sollen,
wobei der Druckcontroller für jeden in dem mindestens einen Eingabehalter vorhandenen Medienart konfiguriert ist, um:
- Bestimmen einer ersten Menge des in dem mindestens einen Eingabebehälter vorhandenen Medienarten,
- Bestimmen einer zweiten Menge des Medienarten, der von Druckaufträgen in der Druckauftragswarteschlange verwendet werden soll, und dazu
- Ermitteln einer positiven Überschussmenge der Medienart basierend auf der ermittelten ersten Menge und der ermittelten zweiten Menge,
wobei die Drucksteuerung einen elektronischen Speicher zum Speichern des positiven Überschussbetrags umfasst und die Anzeige der Benutzeroberfläche so konfiguriert ist, dass sie den positiven Überschussbetrag anzeigt, und
wobei das Drucksystem mit einem Netzwerk verbunden ist, an das ein anderes Drucksystem angeschlossen ist, und der Druckcontroller konfiguriert ist
- um über das Netzwerk eine Benachrichtigung von dem anderen Drucksystem zu empfangen, dass in Bezug auf Druckaufträge, die mittels des anderen Drucksystems gedruckt werden sollen, ein Mangel an einer dritten Menge eines bestimmten Medienarten vorliegt,
- die dritte Menge des bestimmten Medienarten mit der positiven Überschussmenge desselben Medienarten zu vergleichen, unabhängig davon, ob sie im Drucksystem vorhanden ist oder nicht, und
- Informationen über den positiven Überschussbetrag über das Netzwerk an das andere Drucksystem zu übermitteln.

9. Ein Drucksystem nach Anspruch 8, wobei der Druckcontroller so konfiguriert ist, dass er die Informationen über den positiven Überschussbetrag an eine elektronische Cloud-Umgebung übermittelt, auf die das andere Drucksystem über das Netzwerk Zugriff hat.

10. Ein Drucksystem nach einem der Ansprüche 8-9, wobei der positive Überschussbetrag durch Subtrahieren des zweiten Betrags vom ersten Betrag erreicht wird.

11. Ein Drucksystem zur digitalen Verarbeitung von Druckaufträgen, wobei das Drucksystem mindestens einen Eingabehalter für zu bedruckende Medienarten, eine mit Bedienmitteln und einem Display versehene Benutzeroberfläche und einen Druckcontroller zur Steuerung einer Druckauftragswarteschlange umfasst zum Planen von Druckaufträgen, die vom Drucksystem gedruckt werden sollen,
wobei der Druckcontroller für jeden in dem mindestens einen Eingabehalter vorhandenen Medienart so konfiguriert ist, dass er:
- Bestimmen einer ersten Menge des in dem mindestens einen Eingabebehälter vorhandenen Medienarten,
- Bestimmen einer zweiten Menge des Medienarten, der von mindestens einem Druckauftrag in der Druckauftragswarteschlange verwendet werden soll, und dazu
- Bestimmen einer Fehlmenge des Medienarten basierend auf der ermittelten ersten Menge und der ermittelten zweiten Menge,
wobei die Drucksteuerung einen elektronischen Speicher zum Speichern des Fehlbetrags umfasst und die Anzeige der Benutzeroberfläche so konfiguriert ist, dass sie den Fehlbetrag anzeigt,
**dadurch gekennzeichnet**
Der Druckcontroller ist konfiguriert
- über ein Netzwerk eine Benachrichtigung an mindestens ein anderes Drucksystem zu senden, um eine Menge des Medienarten anzufordern, die der Mangelmenge entspricht, und an
- um von mindestens einem anderen Drucksystem im Netzwerk eine positive Überschussmenge des in dem anderen Drucksystem vorhandenen Medienarten zu erhalten, wobei die positive Überschussmenge des Medienarten auf einer Menge des in dem mindestens anderen Drucksystem vorhandenen Medienarten basiert einen Eingabebehälter des mindestens einen anderen Drucksystems und eine Menge des Medienarten, der von Druckaufträgen in der Druckauftragswarteschlange des mindestens einen anderen Drucksystems verwendet werden soll, und
- den erhaltenen positiven Überschussbetrag mit dem Fehlbetrag zu vergleichen und die Benutzeroberfläche ist dazu konfiguriert, Informationen über das andere Drucksystem und den positiven Überschussbetrag auf dem Display der Benutzeroberfläche anzuzeigen.

12. Ein Softwareprodukt, das Programmcode auf einem computerlesbaren, nichtflüchtigen Medium umfasst, wobei der Programmcode, wenn er in einen Druckcontroller eines Drucksystems gemäß den Ansprüchen 8-11 geladen wird, den Druckcontroller dazu veranlasst, das Verfahren gemäß einem der Ansprüche 8-11 auszuführen die Ansprüche 1 bis 7.

## Revendications

1. Procédé de traitement numérique d'images au moyen d'un système d'impression (1A, 1B, 1C) comprenant au moins un support d'entrée (2A, 3A, 2B, 3B, 3C) pour des types de média sur lesquels imprimer, une interface utilisateur (5A, 5B, 5C) pourvue de moyens de fonctionnement et d'un affichage, et un contrôleur d'impression (4A, 4B, 4C) comprenant une mémoire et pour commander une file d'attente de travaux d'impression (23A) comprenant au moins un travail d'impression programmé pour être imprimé par le système d'impression (1A, 1B, 1C),
le procédé comprenant les étapes de
pour chaque type de média présent dans le au moins un support d'entrée:
- déterminer (S1) une première quantité du type de média présent dans le au moins un porte-entrée,
- déterminer (S2) une seconde quantité (332, 336, 432) du type de média destiné à être utilisé par les travaux d'impression dans la file d'attente des travaux d'impression,
- déterminer (S3) une quantité excédentaire positive (333, 337, 433) du type de média à partir de la première quantité déterminée et de la deuxième quantité déterminée,
- stocker (S4) le montant positif de l'excédent dans le stockage du contrôleur d'impression, et
- affichage (S5) du montant positif de l'excédent sur l'affichage de l'interface utilisateur, **caractérisé en ce que** le système d'impression est connecté à un réseau (N) auquel est connecté un autre système d'impression et **en ce que** le procédé comprend les étapes consistent à
- réception (S6) via le réseau d'une notification de l'autre système d'impression indiquant une pénurie d'un troisième média d'un certain type en ce qui concerne les travaux d'impression destinés à être imprimés par l'autre système d'impression,
- comparer (S7) la troisième quantité du type de média donné avec la quantité excédentaire positive du même type de média, qu'elle soit présente ou non dans le système d'impression, et
- soumettre (S8) des informations sur le montant positif de l'excédent à l'autre système d'impression via le réseau.

2. Procédé selon la revendication 1, **caractérisé en ce que** l'excédent positif est affiché numériquement sur l'écran de l'interface utilisateur.

3. Procédé selon l'une quelconque des revendications précédentes, dans lequel les étapes du procédé sont répétées selon une fréquence temporelle prédéterminée.

4. Procédé selon l'une quelconque des revendications précédentes, dans lequel l'étape de détermination du surplus positif comprend la sous-étape de soustraction du second montant du premier montant.

5. Procédé de traitement numérique de travaux d'impression au moyen d'un système d'impression comprenant au moins un support d'entrée pour les types de média à imprimer, une interface utilisateur dotée de moyens de fonctionnement et d'un affichage, et un contrôleur d'impression pour contrôler une file d'attente de travaux d'impression pour programmer des travaux d'impression à imprimer par le système d'impression, le procédé comprenant les étapes de
pour chaque type de média présent dans le au moins un support d'entrée
- déterminer une première quantité du type de média présent dans le au moins un porte-entrée,
- déterminer une seconde quantité du type de média destiné à être utilisé par au moins un travail d'impression dans la file d'attente de travaux d'impression,
- déterminer une quantité manquante du type de média à partir de la première quantité déterminée et de la deuxième quantité déterminée,
- le stockage de la quantité manquante dans le stockage électronique du contrôleur d'impression, et
- afficher le montant manquant sur l'écran de l'interface utilisateur, et
le procédé **caractérisé en ce qu'**il comprend en outre les étapes consistent à
- envoi via un réseau d'une notification à d'autres systèmes d'impression pour demander une quantité du type de média égale à la quantité manquante,
- recevoir d'au moins un autre système d'impression du réseau une quantité excédentaire positive du type de média présent dans l'autre système d'impression, la quantité excédentaire positive du type de média basée sur une quantité du type de média présent dans le au moins un support d'entrée du au moins un autre système d'impression et une quantité du type de média qui est destinée à être utilisée par des travaux d'impression dans la file d'attente des travaux d'impression du au moins un autre système d'impression,
- la comparaison du montant de l'excédent positif reçu avec le montant de la pénurie, et
- affichage d'informations sur le au moins un autre système d'impression et le montant positif de l'excédent sur l'affichage de l'interface utilisateur.

6. Procédé selon la revendication 5, **caractérisé en ce qu'**il comprend les étapes de
- recevoir des informations de localisation de chacun des au moins un autre système d'impression, et
- déterminer un système d'impression le plus proche à distance du au moins un autre système d'impression, lequel système d'impression le plus proche présente également une quantité excédentaire positive suffisante du type média.

7. Procédé selon l'une quelconque des revendications 5 ou 6, dans lequel le procédé comprend l'étape d'envoi d'une deuxième notification à l'au moins un autre système d'impression, la deuxième notification interdisant à l'au moins un autre système d'impression de consommer tout type de média correspondant à la pénurie.

8. Un système d'impression pour le traitement numérique des travaux d'impression, le système d'impression comprenant au moins un support d'entrée pour les types de média à imprimer, une interface utilisateur dotée de moyens de fonctionnement et d'un affichage, et un contrôleur d'impression comprenant un dispositif de stockage et de commande d'une file d'attente de travaux d'impression pour programmer des travaux d'impression à imprimer par le système d'impression,
**caractérisé en ce que** le contrôleur d'impression est configuré pour chaque type de média présent dans le au moins un support d'entrée pour:
- déterminer une première quantité du type de média présent dans le au moins un porte-entrée,
- déterminer une seconde quantité du type de média destiné à être utilisé par les travaux d'impression dans la file d'attente des travaux d'impression, et
- déterminer une quantité excédentaire positive du type de média sur la base de la première quantité déterminée et de la deuxième quantité déterminée,
**caractérisé en ce que** le contrôleur d'impression comprend une mémoire électronique pour mémoriser le surplus positif et **en ce que** l'affichage de l'interface utilisateur est configuré pour afficher le surplus positif, et
dans lequel le système d'impression est connecté à un réseau auquel un autre système d'impression est connecté et le contrôleur d'impression est configuré
- de recevoir, via le réseau, une notification de l'autre système d'impression indiquant qu'il manque un troisième média d'un certain type en ce qui concerne les travaux d'impression destinés à être imprimés au moyen de l'autre système d'impression,
- de comparer la troisième quantité du type de média donné avec la quantité excédentaire positive du même type de média, qu'elle soit présente ou non dans le système d'impression, et
- transmettre des informations sur le montant positif de l'excédent à l'autre système d'impression via le réseau.

9. Système d'impression selon la revendication 8, **caractérisé en ce que** le contrôleur d'impression est configuré pour envoyer l'information sur le surplus positif à un environnement de nuage électronique auquel l'autre système d'impression a accès via le réseau.

10. Système d'impression selon l'une quelconque des revendications 8 à 9, dans lequel la quantité excédentaire positive est obtenue en soustrayant la seconde quantité de la première quantité.

11. Un système d'impression pour le traitement numérique des travaux d'impression, le système d'impression comprenant au moins un support d'entrée pour les types de média à imprimer, une interface utilisateur dotée de moyens de fonctionnement et d'un affichage, et un contrôleur d'impression pour contrôler une file d'attente de travaux d'impression pour programmer des travaux d'impression à imprimer par le système d'impression,
le contrôleur d'impression étant configuré pour chaque type de média présent dans le au moins un support d'entrée pour:
- déterminer une première quantité du type de média présent dans le au moins un porte-entrée,
- déterminer une seconde quantité du type de média destiné à être utilisé par au moins un travail d'impression dans la file d'attente de travaux d'impression, et
- déterminer une quantité manquante du type de média en fonction de la première quantité déterminée et de la deuxième quantité déterminée,
dans lequel le contrôleur d'impression comprend une mémoire électronique pour mémoriser la quantité manquante et l'affichage de l'interface utilisateur est configuré pour afficher la quantité manquante,
**caractérisé en ce que**
le contrôleur d'impression est configuré
- envoyer via un réseau une notification à au moins un autre système d'impression pour demander une quantité du type de média égale à la quantité manquante, et à
- recevoir d'au moins un autre système d'impression du réseau une quantité excédentaire positive du type de média présent dans l'autre système d'impression, la quantité excédentaire positive du type de média basée sur une quantité du type de média présent dans le au moins un support d'entrée du au moins un autre système d'impression et une quantité du type de média qui est destinée à être utilisée par des travaux d'impression dans la file d'attente des travaux d'impression du au moins un autre système d'impression, et
- de comparer le montant de l'excédent positif reçu avec le montant de la pénurie, et l'interface utilisateur est configurée pour afficher des informations concernant l'autre système d'impression et la quantité excédentaire positive sur l'affichage de l'interface utilisateur.

12. Produit logiciel comprenant un code de programme sur un support non transitoire lisible par ordinateur, lequel code de programme, lorsqu'il est chargé dans un contrôleur d'impression d'un système d'impression selon les revendications 8 à 11, amène le contrôleur d'impression à mettre en oeuvre le procédé selon l'une quelconque des revendications 1 à 7.
